# EUROPEAN PATENT SPECIFICATION

(11) **EP 3 870 762 B1**
(45) Date of publication and mention of the grant of the patent: **26.11.2025**
(21) Application number: 19816953.4
(22) Date of filing: 25.10.2019
(51) Int. Cl.: E01F 9/608, E01F 9/658, E01F 9/70, G08G 1/01

(54) **INTELLIGENT STICKS TO MARK AN EDGE OF A ROAD FOR SNOW CLEARING**
INTELLIGENTE SCHNEESTANGEN ZUM MARKIEREN DES FAHRBAHNRANDES FÜR DIE SCHNEERÄUMUNG
PIQUETS DE NEIGE INTELLIGENTS DE MARQUAGE DU BORD DE LA ROUTE POUR LE DÉBLAIEMENT

(30) Priority: 26.10.2018 NO 20181383
(43) Date of publication of application: 01.09.2021
(73) Proprietor: Sintef TTO, 7465 Trondheim (NO)
(72) Inventor: MOEN, Terje, 7353 Børsa (NO)
(74) Representative: Bryn Aarflot AS
(86) International application number: PCT/NO2019/050234
(87) International publication number: WO 2020/085920

(56) References cited:
- EP-A2- 2 345 464
- WO-A1-02/04769
- WO-A1-2017/072109
- WO-A1-91/09194
- DE-U1- 20 011 659
- JP-A- 2003 193 435
- US-A1- 2011 035 140
- US-A1- 2018 195 246

## Description

### Field of the invention

The present invention relates to an installation system for installing sticks to mark an edge of a road for snow-clearing, as well as sticks to mark the edge of the road for snow-clearing as such.

### Background art

Snow poles are sticks that are placed at the edges of a road in order to indicate the outer edge of a roadway. Snow poles make it easier for road users to follow a road. Typically, snow poles are to provide guidance to road maintenance workers by indicating the outer edge for roadway snow removal as well as marking special objects inside and outside of the roadway.

Today, sticks to mark the edge of a road for snow-clearing are mainly made from hollow plastic or bamboo tubes having a length of about 2 meters and including white reflective sections. The length may vary but is typically between 180 cm and 200 cm, while the outer diameter is commonly between 20 - 25 mm.

The length and diameter may vary in order for the sticks to mark an edge of a road for snow-clearing to be adapted to local conditions such as sand or snow depth and wind conditions, etc.

At present, the sticks to mark an edge of a road for snow-clearing are often made of a plastic material such as polypropylene.

Sticks to mark an edge of a road for snow-clearingcan be installed for lengthy periods or be installed for shorter periods such as in the winter season, for example.

It may result in a safety problem if sticks to mark an edge of a road for snow-clearing break, are removed or covered. In a worst case scenario a stick to mark an edge of a road for snow-clearing that has been moved can be misleading, representing a danger to road users.

An apparatus for automatic placement of sticks to mark an edge of a road for snow clearing is disclosed in WO 91/09194. The apparatus is mounted on a vehicle and assigned assigned partly an automatically working percussion hammer (11, 11') adapted to make a hole in the ground for each single stick to mark an edge of a road for snow clearing (4), partly an independent magazine (3) for a supply of sticks to mark an edge of a road for snow clearing placed on the vehicle (2). For automatic placement of the sticks to mark an edge of a road for snow clearing, the apparatus comprise a funnel (7) which, in an active guiding position, narrows downwardly towards an open bottom opening thereof, and being adapted to cooperate with said percussion hammer (11, 11 ') during the hole-making, as well as assigned a stick to mark an edge of a road for snow clearing handling device (15-18) having a catching and holding means (16, 20, 21).

Further, US 2011/035140 discloses a snow pole for roadsides with a motion sensor adapted to sense the passage of a vehicle.

It is an object of the present invention to provide solutions for addressing the above problems.

### Summary of the invention

According to the present invention, there is provided an installation system for installing sticks to mark an edge of a road for snow-clearing along a road section as defined by claim 10.

The installation system may further comprise: a stick to mark an edge of a road for snow-clearing manipulator, an inspection and control unit of the stick to mark an edge of a road for snow-clearing manipulator, and an activation system having communication means for communicating with the first computer. The transport and installation arrangement may comprise position-determining means, and the position data from the transport and installation arrangement may be configured to transfer position data to at least one stick to mark an edge of a road for snow-clearing.

The transport and installation arrangement can be configured to transfer timing parameters, such as time stamps, to at least one stick to mark an edge of a road for snow-clearing.

Further according to the present invention there is provided a stick to mark an edge of a road for snow-clearing as defined by claim 1.

The stick to mark an edge of a road for snow-clearing may further at least comprise:
a) instrumentation for measuring and collecting physical parameters from the surroundings,
b) one or more operating means for operating instrumentation for measuring and collecting physical parameters from the surroundings, and
means for:
i. storing collected physical parameters, and/or
ii. relaying collected physical parameters using communication means.

A stick to mark an edge of a road for snow-clearing may further comprise one or more processing units for processing collected physical parameters. It is not claimed that the processing unit may be one of or a combination of:
one or more microcontrollers or one or more CPUs, one or more programmable logic circuits, and one or more PLSs.

The stick to mark an edge of a road for snow-clearing may further comprise one or a combination of:
one or more microphones, one or more pressure sensors, one or more humidity meters, a theft sensor, one or more GPS modules, one or more timers, and one or more light sensors.

The timers may be controlled by radio and adjust themselves to time signals from a radio station and/or where the one or more timers adjust themselves to received GPS time signals. In a not claimed configuration the communication means may include any one or combination of:
WLAN, Bluetooth, ZigBee, Bluetooth LE, Ultra Wide Band, GSM, UMTS, HSDPA, LTE 5G, NB-IoT and LoRaWAN, and CDMA2000.

The stick to mark an edge of a road for snow-clearing may be provided internally with thermoelectric elements for generating power to the rechargeable batteries and/or super/hyper capacitors.

The stick to mark an edge of a road for snow-clearing may comprise inductive charging means.

One or more accelerometers, gyrometers, vibration meters or one or more differential pressure sensors may be configured to monitor the condition of a stick to mark an edge of a road for snow-clearing.

A specific embodiment of the stick to mark an edge of a road for snow-clearing may comprise at least:
a) instrumentation inside the stick to mark an edge of a road for snow-clearing for measuring and collecting physical parameters from the surroundings, said instrumentation being divided into an upper part located in the upper portion of the stick to mark an edge of a road for snow-clearing and a lower part located in the lower portion of the stick to mark an edge of a road for snow-clearing, with a communication interface being provided between the upper part of the instrumentation and the lower part of the instrumentation
b) the one or more operating means for operating the instrumentation and operating the processing unit or processing units, said operating means for operating the instrumentation and for operating the processing unit being located in the lower portion of the stick to mark an edge of a road for snow-clearing,
c) the means for storing collected physical parameters,
d) the means of communication being means for short-range communication and/or long-range communication, and
e) the one or more processing units for processing collected physical parameters..

Further features and advantages will become apparent from the appended patent claims.

### Brief description of the drawings

To facilitate the understanding of the invention, the description of the invention is accompanied by drawings, in which
Fig. 1 shows a truck having a manipulator for installing sticks to mark an edge of a road for snow-clearing,
Fig. 2 shows a system for installing sticks to mark an edge of a road for snow-clearing,
Fig. 3 shows an operational stick to mark an edge of a road for snow-clearing system,
Fig. 4 shows a system for retrieving, maintaining and/or replacing sticks to mark an edge of a road for snow-clearing,

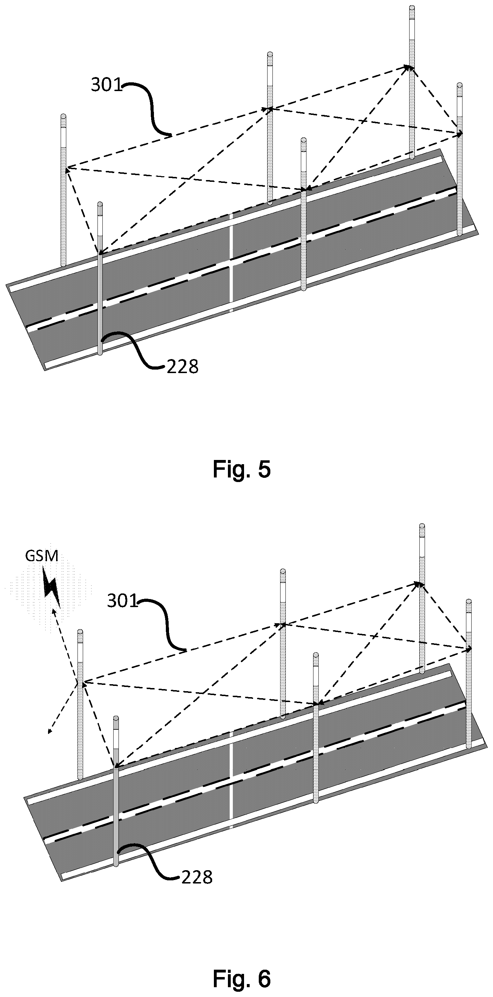

Fig. 5 shows a road section with several sticks to mark an edge of a road for snow-clearing, the sticks to mark an edge of a road for snow-clearing being configured as a mesh network,
Fig. 6 shows a road section with several sticks to mark an edge of a road for snow-clearing, the sticks to mark an edge of a road for snow-clearing being configured as a mesh network like in Fig. 5, with one or more of the sticks to mark an edge of a road for snow-clearing additionally comprising communication modules for connecting to a cellular network,
Fig. 7 shows a road section with several sticks to mark an edge of a road for snow-clearing, the sticks to mark an edge of a road for snow-clearing being configured as a mesh network like in Fig 5, with two sticks to mark an edge of a road for snow-clearing additionally being shown to operate as hubs in the network,
Fig. 8 shows an exemplary stick to mark an edge of a road for snow-clearing from the outside and from the inside with energy supply, communication equipment, and measurement equipment,
Fig. 9 shows an exemplary modular stick to mark an edge of a road for snow-clearing including modules for being attached to the stick to mark an edge of a road for snow-clearing,
Fig. 10 shows exemplary modules to be mounted externally on sticks to mark an edge of a road for snow-clearing,

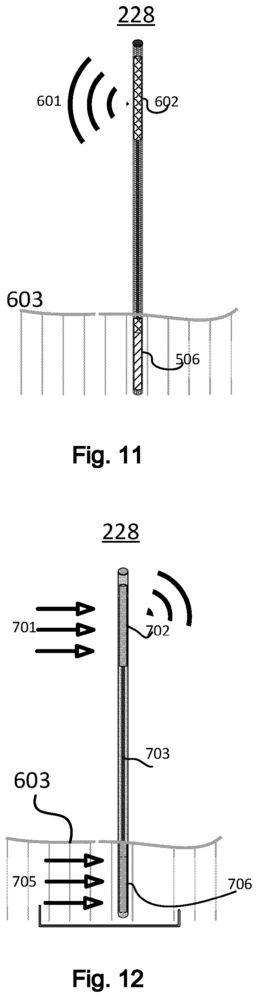

Fig. 11 shows a stick to mark an edge of a road for snow-clearing including one or more radio modules, one or more antennas, and an energy supply,
Fig. 12 shows a stick to mark an edge of a road for snow-clearing including equipment for measuring parameters transferred by air, one or more microcontrollers, etc., and further including equipment for measuring parameters transferred by ground,
Fig. 13 shows a stick to mark an edge of a road for snow-clearing including equipment for measuring parameters transferred by air, and further including equipment for measuring vibrations transferred by ground, such as accelerometers, for example,
Fig. 14 shows a road section with several sticks to mark an edge of a road for snow-clearing, the sticks to mark an edge of a road for snow-clearing being configured for measuring vibrations transferred by air, such as wind,
Fig. 15 shows a stick to mark an edge of a road for snow-clearing including equipment for measuring temperature, air humidity, and pressure, etc,
Fig. 16 shows a road section with several sticks to mark an edge of a road for snow-clearing, the sticks to mark an edge of a road for snow-clearing being configured for measuring temperature, air humidity, and pressure, etc.,
Fig. 17 shows a road section with several sticks to mark an edge of a road for snow-clearing, the sticks to mark an edge of a road for snow-clearing constituting a distributed sensor network, and
Fig. 18 shows a road section with several sticks to mark an edge of a road for snow-clearing where a vehicle having position-determining equipment transfers position parameters to sticks to mark an edge of a road for snow-clearing so that each stick to mark an edge of a road for snow-clearing is assigned a unique position.

### Detailed description of the invention

The present invention will now be described in more detail with reference to the accompanying drawings. It should be noted that the drawings are not to scale, but rather with distinct features being emphasized so as to facilitate the understanding.

When installed, sticks to mark an edge of a road for snow-clearing are subject to physical influences from their surroundings, which influences result in pole deflection, vibration of the poles, and so on. The response of a stick to mark an edge of a road for snow-clearing is a function of the influence applied thereto. It is the observation of these facts that provides the basis of the present invention. Another observation on which a variant of the present invention is based is to exploit the fact that sticks to mark an edge of a road for snow-clearing are located in large numbers along a road shoulder.

It is also disclosed communication solutions utilizing the large number of sticks to mark an edge of a road for snow-clearing located along a roadway. The large number of sticks to mark an edge of a road for snow-clearing along a road shoulder may also be utilized to track movements on or along a road, such as «wind» following a moving vehicle. Light moving along the roadway may also be exploited to track movements on or along a road.

The present invention provides solutions for instrumented sticks to mark an edge of a road for snow-clearing. Also provided are systems for installing instrumented sticks to mark an edge of a road for snow-clearing. Systems for maintaining sticks to mark an edge of a road for snow-clearing, for replacing sticks to mark an edge of a road for snow-clearing, and for retrieving sticks to mark an edge of a road for snow-clearing are not part of the claimed invention. By instrumenting the sticks to mark an edge of a road for snow-clearing as well as providing them with means of communication it is possible to collect real-time information communicated from the instrumented sticks to mark an edge of a road for snow-clearing, and, additionally, if the sticks to mark an edge of a road for snow-clearing are provided with storage means, then the sticks to mark an edge of a road for snow-clearing may store information internally.

The instrumentation may comprise simple sensor systems having simple communication means for close-range communication and an energy supply for powering the instrumentation.

The instrumentation may also be far more comprehensive and include sensor arrays for measuring a number of parameters, and advanced data processing equipment and advanced communication equipment may also be included in an instrumented stick to mark an edge of a road for snow-clearing. Several sticks to mark an edge of a road for snow-clearing may collectively form a network both for the purpose of communication and in relation to data collection.

Instrumented sticks to mark an edge of a road for snow-clearing installed along a road section may be identical or they may be customized for specific tasks. Typically, a number of the sticks to mark an edge of a road for snow-clearing may be provided with communication means for long-range communication. The poles provided with means for long-range communication may also receive timing information sent from a central unit. Position data may also be sent to sticks to mark an edge of a road for snow-clearing if the sticks to mark an edge of a road for snow-clearing don't include a GPS or haven't received position information on installation.

More particularly, the present invention comprises a system for installing instrumented sticks to mark an edge of a road for snow-clearing, a system of instrumented sticks to mark an edge of a road for snow-clearing that have been installed and are able intercommunicate and having a central unit, as well as a system for retrieving, replacing, and maintaining/repairing instrumented sticks to mark an edge of a road for snow-clearing. The invention is further directed to an instrumented stick to mark an edge of a road for snow-clearing having communication equipment and an energy supply for powering the communication unit and instrumentation. The instrumentation may comprise one or more sensors. The stick to mark an edge of a road for snow-clearing may also comprise data stores and processing units.

A stick to mark an edge of a road for snow-clearing with simple instrumentation may comprise at least a CPU or controller, one or more sensors, at least a wireless communication interface, as well as an energy module. The stick to mark an edge of a road for snow-clearing may be activated and a geo-coded position may be programmed during installation along a road, or, alternatively, the stick to mark an edge of a road for snow-clearing may be provided with means able to determine the position of a stick to mark an edge of a road for snow-clearing. According to a configuration, the sticks to mark an edge of a road for snow-clearing may communicate with each other via a wireless local network, such as a mesh network, and remotely via the public telecommunication network. Thus, the sticks to mark an edge of a road for snow-clearing form a sensor network able to provide data for various purposes. One stick to mark an edge of a road for snow-clearing by itself will be able to measure temperature, humidity, wind, etc. Having two sticks to mark an edge of a road for snow-clearing on the same side of the road edge, it will be possible to measure the velocity and direction of a vehicle by analysing the sound or the movement of the pole due to turbulence from the vehicle, for example. Also, several poles combined will be able to register the build-up of snow banks in that the movement or swaying of the poles is reduced when they are covered by snow.

In some systems it can be envisioned to include sticks to mark an edge of a road for snow-clearing 228, 900 each of which is provided with means for long-range communication.

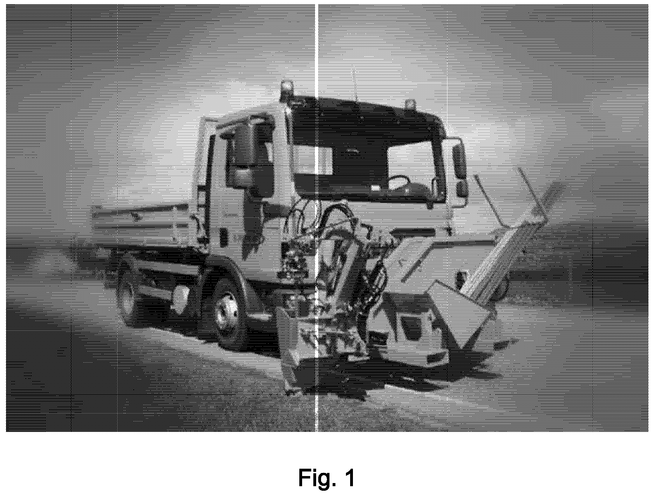

The sticks to mark an edge of a road for snow-clearing may be installed along the road by a vehicle fitted with a "stick to mark an edge of a road for snow-clearing manipulator," see example of Fig. 1. Similarly, the stick to mark an edge of a road for snow-clearing manipulator may retrieve the poles at a later point.

According to an embodiment, it comprises a stick to mark an edge of a road for snow-clearing system 200, 300, 400 which may comprise a central system 210 operated by a user. The central system may indicate the function assigned sticks to mark an edge of a road for snow-clearing 228, 900 in different sections along the road system. By using a map application it is possible to plan the installation of the sticks to mark an edge of a road for snow-clearing 228, 900 and determine which functions and services the resulting sensor network is to include. Information from central system 210 is transferred to an activation system 224, inter alia, which may configure the individual sticks to mark an edge of a road for snow-clearing 228, 900 during installation along a road. In an embodiment, central system 210 may also configure sticks to mark an edge of a road for snow-clearing 228, 900 which have already been installed.

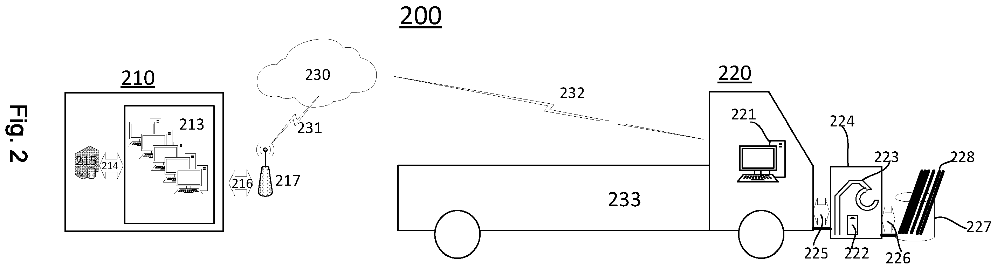

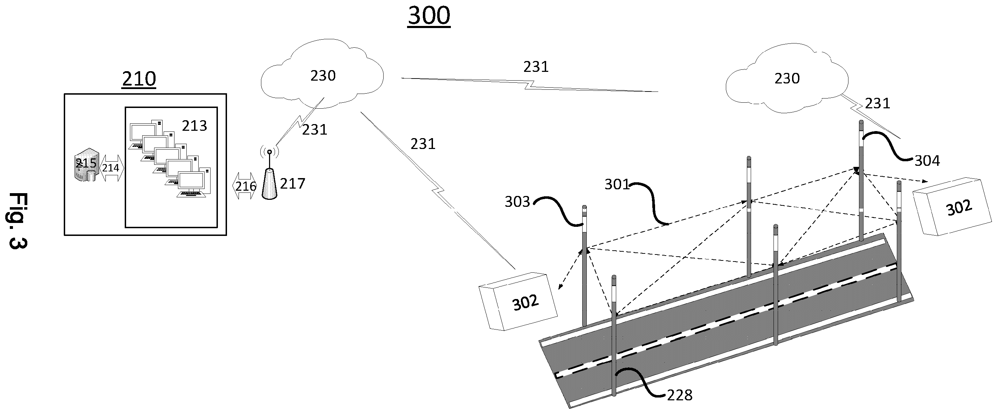

The stick to mark an edge of a road for snow-clearing system may comprise an activation system in the form of one or more activation units 224 mounted on or proximate to the stick to mark an edge of a road for snow-clearing manipulators used in the installation of sticks to mark an edge of a road for snow-clearing, see Figs. 2 - 4. Activation unit 224 may be mounted so as to almost contact stick to mark an edge of a road for snow-clearing 228, 900 when being installed. In this manner it is possible to establish a very short-range system ensuring that activation unit 224 only communicates with one stick to mark an edge of a road for snow-clearing 228, 900 at a time. Activation unit 224 may communicate with central system 210. The communication between activation unit 224 and central system 210 may be accomplished directly or via a user system/transport and installation arrangement 220 which may be operated by a driver or passenger of a vehicle that is to install sticks to mark an edge of a road for snow-clearing 228, 900. Activation unit 224 may serve several primary functions:
a) Switching on or off the electronics of the sticks to mark an edge of a road for snow-clearing 228, 900 depending on whether the poles are installed or retrieved.
b) Programming the position of the stick to mark an edge of a road for snow-clearing. The position can be obtained from an accurate GPS, and the actual point of insertion of the stick to mark an edge of a road for snow-clearing can be compensated for.
c) Configuring the function of the sticks to mark an edge of a road for snow-clearing and determining which sensors shall be active for each stick to mark an edge of a road for snow-clearing.
d) Carrying out a test of the function of the sticks to mark an edge of a road for snow-clearing. If the test is passed on installation, then the pole is inserted in the ground 603. In the opposite case, the pole is placed in a storage container. On retrieval, improperly functioning sticks to mark an edge of a road for snow-clearing can be screened out.

In an embodiment, activation unit 224 may update the firmware of the sticks to mark an edge of a road for snow-clearing during installation, retrieval, maintenance or repair of the sticks to mark an edge of a road for snow-clearing 228, 900. This depends, among other things, on how long time such programming takes.

### Installation system for installing sticks to mark an edge of a road for snow-clearing

As indicated above, the present invention comprises a fully functional system that includes installation of instrumented sticks to mark an edge of a road for snow-clearing. In particular, the system comprises means for operational operation of a plurality of instrumented sticks to mark an edge of a road for snow-clearing, which sticks to mark an edge of a road for snow-clearing may include storage and/or communication means. In the following, an installation system 200 for installing sticks to mark an edge of a road for snow-clearing 228, 900 along a road section will be described in more detail with reference to Fig. 2.

Fig. 2 shows an installation system 200 comprising a central system 210 and a transport and installation arrangement 220 including an installation assembly 222, 223, 224. Transport and installation arrangement 220 is shown to include a truck 233 transporting sticks to mark an edge of a road for snow-clearing 228, 900 in the drawing. In the drawing, the truck is provided with means 221 for communicating with central system 210. Said means 221 for communicating with central system 210 comprise a workstation having an interface for one or more users. The workstation may be a computer, a smartphone, a tablet computer, or a dedicated I/O unit having a processor. The means for communication further comprise communication means in the form of transmitter and receiver as well as one or more antennas. Communication with central system 210 may be performed via a cellular network and via the Internet 230.

The means 221 for communication with central system 210 may also comprise means for communication 225 with an inspection and control unit 222 for a stick to mark an edge of a road for snow-clearing manipulator/robot 223. Instructions for installation of sticks to mark an edge of a road for snow-clearing 228, 900 can be sent to the inspection and control unit. Additionally, data may be transmitted to sticks to mark an edge of a road for snow-clearing to be installed.

Data that is transferred to the poles may include position data, that is, the position at which a pole will be positioned. Position data may be transferred from the transport and installation arrangement 220, which may be provided with a GPS unit or other means for determining the position of transport and installation arrangement 220, which position data may form the basis of position data that is sent to a stick to mark an edge of a road for snow-clearing 228, 900 to be installed. It will be possible to compensate for the distance between the transport and installation arrangement 220 and the physical location at which the stick to mark an edge of a road for snow-clearing 228, 900 in question is placed.

Identification data may be transferred from the transport and installation arrangement 220 to a stick to mark an edge of a road for snow-clearing to be installed. This identification will be mapped to/associated with corresponding position data for the stick to mark an edge of a road for snow-clearing in question, which data typically will be stored in a table and transferred to a server or database 215 of a central unit 210. Such identification may typically be combined in that the stick to mark an edge of a road for snow-clearing has passive identification marking in the form of barcodes, QR codes, or the like. The sticks to mark an edge of a road for snow-clearing 228, 900 may also be provided with RFID chips or similar means providing them with a unique identity. A stick to mark an edge of a road for snow-clearing may be provided with several identification data. For example, the installation assembly may read an identification tag from a stick to mark an edge of a road for snow-clearing 228, 900, following which this identification may be mapped to a dynamic identification generated by the transport and installation arrangement 220 or central system 210. In addition, said identification data may be associated with position data.

Alternatively, a stick to mark an edge of a road for snow-clearing 228, 900 may initially be provided with an identification, and on installation, this identification may be read by the inspection and control unit 222 or stick to mark an edge of a road for snow-clearing manipulator/robot 223. An identification that has been read may be associated with position data as indicated above. In an embodiment, an instrumented stick to mark an edge of a road for snow-clearing may itself be provided with position-determining means in the form of GPS. The position may also is determined by radio in that a stick to mark an edge of a road for snow-clearing having a known position is used as a reference while the neighbouring sticks to mark an edge of a road for snow-clearing are assigned a relative position determined by the distance to the stick to mark an edge of a road for snow-clearing 228, 900 with the known position.

During installation, inspection and control unit 222 or stick to mark an edge of a road for snow-clearing manipulator/robot 223 may activate sticks to mark an edge of a road for snow-clearing 228, 900 to be installed. Activation may mean that one stick to mark an edge of a road for snow-clearing is transitioned from a "sleeping state" to an active state. In the active state, any electronic circuits may be reset or be put in a particular mode.

The sticks to mark an edge of a road for snow-clearing may be provided with rechargeable batteries and with inductive charging circuitry, which inductive charging may take place during transportation of sticks to mark an edge of a road for snow-clearing 228, 900 in that a stick to mark an edge of a road for snow-clearing basket is provided with stick mark an edge of a road for snow-clearing recharging means.

During installation of sticks to mark an edge of a road for snow-clearing, the sticks to mark an edge of a road for snow-clearing installed may optionally be assigned a time stamp, that is, a reference time for the point at which they were activated/installed. Transport and installation arrangement 220 may be configured to transfer timing parameters, such as time stamps, to at least one stick to mark an edge of a road for snow-clearing 228, 900.

### Communication and measurement system

When a number of sticks to mark an edge of a road for snow-clearing have been installed along a road section, for example, by the installation system for installing sticks to mark an edge of a road for snow-clearing 200, then the sticks to mark an edge of a road for snow-clearing 228, 900 may form a communication and measurement system 300. The sticks to mark an edge of a road for snow-clearing 228, 900 distributed along a road section may form a communication network and a sensor network.

The communication and measurement system can coarsely be divided into a central system 210, a distributed measurement system along a roadway having intermediate communication links 217, 230.

For example, central system 210 may be one road traffic central or several road traffic centrals. Road traffic centrals may communicate with each other. Central system 210 may comprise one or more computers 213. Computers 213 may be connected to one or more data servers or databases 215 via one or more communication channels 214. Said data servers or databases may store information received from distributed measurement systems along a roadway. Several distributed measurement systems may be established along several road sections and they may communicate with one or more central systems 210.

Central system 210 may communicate with one or more distributed measurement systems along one or more road sections via a wireless or wired link to a base station 217. Base station 217 may communicate wirelessly 231 via the Internet or a backbone network 230 to one or more distributed measurement systems. Base station 217 may be a base station of a cellular network but may also be a base station 217 of a wired system (not shown) communicating with one or more distributed measurement systems. Between base station 217 and the distributed measurement system(s) there may be several intermediate relay stations (not shown).

The measurement system(s) along one or more road sections include at least two sticks to mark an edge of a road for snow-clearing 228, 900 having means of communication. The sticks to mark an edge of a road for snow-clearing as members of a sensor network or as independent measurement stations will be discussed in more detail in a separate section below.

In a configuration, the measurement system along a roadway may comprise one or more hub sticks to mark an edge of a road for snow-clearing 303, 304. A hub stick to mark an edge of a road for snow-clearing 303, 304 may comprise a communication module 302 for wireless or wired communication with one or more central systems 210. A hub stick to mark an edge of a road for snow-clearing may further comprise communication means for short-range communication with neighbouring sticks to mark an edge of a road for snow-clearing 228, 900. Intercommunication 301 between the sticks to mark an edge of a road for snow-clearing 228, 900 may be arranged in a MESH configuration.

In another configuration, one or more of the sticks to mark an edge of a road for snow-clearing may be autonomous and communicate directly with central unit 210.

Communication and measurement system 300 may at least be provided with instrumentation 503 for measuring and collecting physical parameters from the surroundings.

### Stick to mark an edge of a road for snow-clearing retrieval system

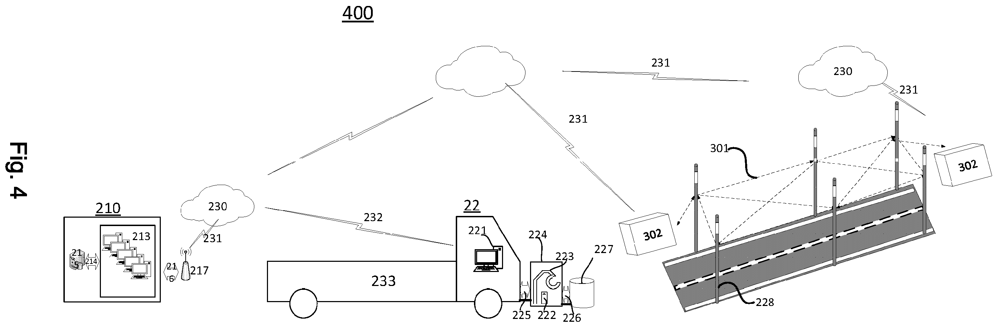

As indicated above, it is also disclosed a fully functional system including installation, replacement, maintenance and retrieval of instrumented sticks to mark an edge of a road for snow-clearing. In the following, a stick to mark an edge of a road for snow-clearing retrieval system 400 for retrieving sticks to mark an edge of a road for snow-clearing 228, 900 along a road section will be described in more detail with reference to Fig. 4.

Sticks to mark an edge of a road for snow-clearing 228, 900 of a communication and measurement system 300 may remain installed for a given time period. After such time period the sticks to mark an edge of a road for snow-clearing 228, 900 will be retrieved by a stick to mark an edge of a road for snow-clearing retrieval system 400. Also, a stick to mark an edge of a road for snow-clearing retrieval system 400 may be used in cases in which one or more sticks to mark an edge of a road for snow-clearing 228, 900 are to be replaced, e.g. because the sticks to mark an edge of a road for snow-clearing 228, 900 don't work properly or because they will soon become inoperative due to lack of capacity of operating means, for example.

The system 400 for retrieving, maintaining/repairing and replacing instrumented sticks to mark an edge of a road for snow-clearing 228, 900 along a road section may comprise a transport and retrieval assembly 22 having a retrieval arrangement 222, 223, 224 and a stick to mark an edge of a road for snow-clearing holder 227. The stick to mark an edge of a road for snow-clearing holder will accommodate sticks to mark an edge of a road for snow-clearing to be retrieved. Transport and retrieval assembly 22 may further comprise a first computer 221 having communication means for short-range communication and long-range wireless communication. Typically, the short-range communication means will comprise means for communication with sticks to mark an edge of a road for snow-clearing 228, 900 located in the basket or sticks to mark an edge of a road for snow-clearing 228, 900 of a communication and measurement system 300. The short-range communication means may also include means for communication with an inspection and control unit 222 for stick to mark an edge of a road for snow-clearing installation and stick to mark an edge of a road for snow-clearing retrieval and/or a robotic arm (stick to mark an edge of a road for snow-clearing manipulator) 223 to pick up sticks to mark an edge of a road for snow-clearing from stick to mark an edge of a road for snow-clearing basket 227 or to retrieve sticks to mark an edge of a road for snow-clearing installed along a roadway. The short-range communication means may be embodied as wireless transceivers or be wired between the vehicle 233 via a link 225 to an activation system 224. Activation system 224 may comprise inspection and control unit 222 and robotic arm 223.

In Fig. 4, communication links 225 are shown between vehicle 233 and inspection and control unit 222, as well as between inspection and control unit 222 and basket 227 via a link 226.

Each short-range communication means may be wireless or a combination of wireless and wired.

The system 400 for retrieving, maintaining/repairing and replacing instrumented sticks to mark an edge of a road for snow-clearing 228, 900 along a road section may further comprise a central system 210. Central system 210 may comprise one or more second computers 213 and one or more communication means for wireless communication with the transport and retrieval assembly 22. Typically, the central system may be one or more road traffic centrals of an identical type as discussed for the communication and measurement system 300.

During retrieval of sticks to mark an edge of a road for snow-clearing 228, 900, identification on the individual stick to mark an edge of a road for snow-clearing retrieved can be read and identification information may be stored locally in a workstation 221 of vehicle 233 and/or relayed to central system 210. If the stick to mark an edge of a road for snow-clearing 228, 900 or sticks to mark an edge of a road for snow-clearing being retrieved lacks identification, then such identification can be assigned to them when retrieved. In addition, during retrieval of sticks to mark an edge of a road for snow-clearing 228, 900, a relative or absolute position may be assigned to sticks to mark an edge of a road for snow-clearing 228, 900 retrieved. Each stick to mark an edge of a road for snow-clearing 228, 900 retrieved can also be assigned a time stamp which may indicate the time of retrieval, for example.

### Stick to mark an edge of a road for snow-clearing

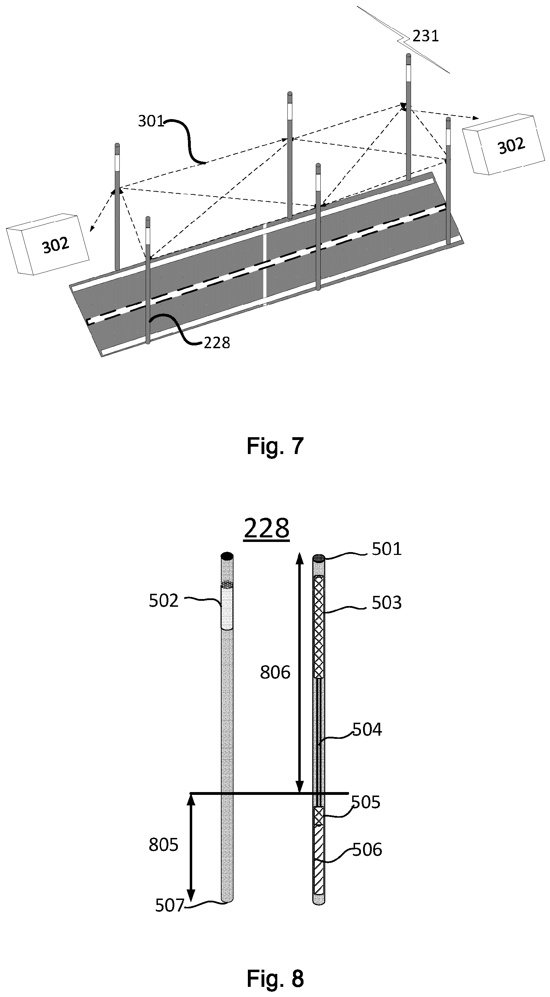

Fig. 8 shows an exemplary stick to mark an edge of a road for snow-clearing 228, 900 according to the present invention. In Fig. 8, a stick to mark an edge of a road for snow-clearing is shown as a separate elongate body having an upper end 501 and a lower end 507, which elongate body houses different components 503, 504, 505, 506 in a internal cavity of the stick to mark an edge of a road for snow-clearing 228, 900.

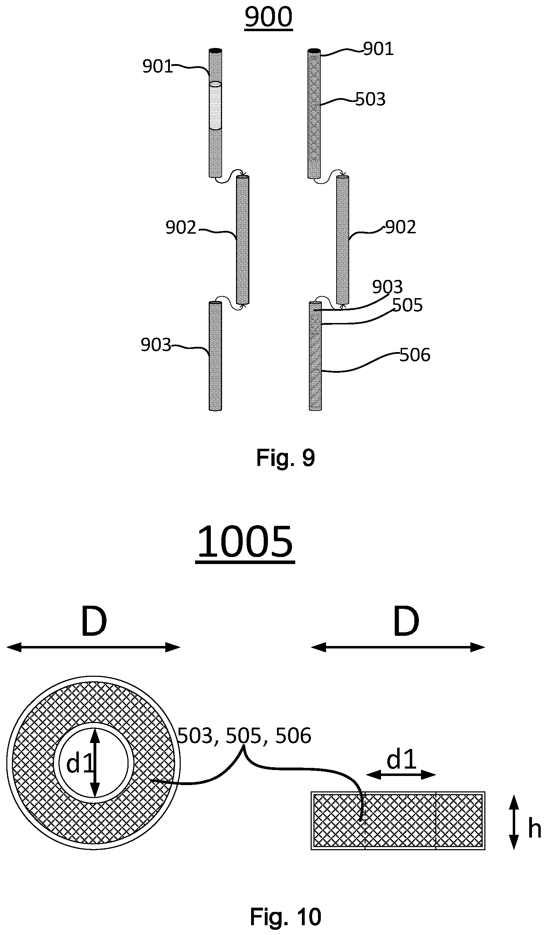

A stick to mark an edge of a road for snow-clearing 228, 900 may in also be modular 900 in that it can be assembled from several module sections 901, 902, 903 as illustrated in Fig. 9. In Fig. 9, an upper 901 and a lower module section 903 are provided with functionality 503, 505, 506. In Fig. 9, a central module section 902 is a passive elongate tubular body like a regular stick to mark an edge of a road for snow-clearing. The length of module sections and the central tubular body 902 can be adapted so that a stick to mark an edge of a road for snow-clearing composed by module sections 901, 902, 903 is given a desired overall length. The module sections may be assembled in several manners, with non-exhaustive examples being by threaded attachment, bayonet attachment, snap attachment, press fitting, in which a tapered module end is pressed into a female module end. The module sections can also be adhesively bonded to each other. Wires can be envisioned to stretch between upper and lower module sections, or, alternatively, the central module section may be provided with conductive means and electrical contacts fitting together between two module sections adapted to be interconnected.

When assembled, a stick to mark an edge of a road for snow-clearing of the modular type 900 and the integrally cast variant 228, 900 shown in Fig. 8 will appear equal functionally and visually.

The sticks to mark an edge of a road for snow-clearing of Figs. 8 and 9 are both provided with functionality in the form of an electronics module 503 and energy module 505, 506. The electronics module may include means of communication, sensors, detectors, signal processing electronics, and processors.

Regular sticks to mark an edge of a road for snow-clearing are elongate plastic or bamboo tubes without any added functionality. In an embodiment not corresponding to the invention, sticks to mark an edge of a road for snow-clearing without any added functionality may be provided with functional elements. In Fig. 10, a module 1005 for being mounted on sticks to mark an edge of a road for snow-clearing is shown - stick to mark an edge of a road for snow-clearing module 1005. The stick to mark an edge of a road for snow-clearing module is shown as an annular body having straight side walls and an internal opening of a diameter d1. The stick to mark an edge of a road for snow-clearing module is shown to have an outer diameter D and a height h. A stick to mark an edge of a road for snow-clearing module 1005 as shown in Fig. 10 may be configured to be treaded onto a stick to mark an edge of a road for snow-clearing having an outer diameter that is approximately equal to d1. Stick to mark an edge of a road for snow-clearing module 1005 may be provided with gripping or fastening means on the inner side thereof so that it will be securely fixed on a stick to mark an edge of a road for snow-clearing after having been treaded onto the pole.

Stick to mark an edge of a road for snow-clearing module 1005 may be internally tapered, adapted for being press-fitted onto a stick to mark an edge of a road for snow-clearing, it may include threads, or it may be adhesively bonded to a stick to mark an edge of a road for snow-clearing.

Stick to mark an edge of a road for snow-clearing module 1005 is shown as an annular body, which is to be construed as an example only as various other configurations are conceivable. Moreover, the stick to mark an edge of a road for snow-clearing modules can be manufactured with different functionality and may be made so as to be mechanically, electrically, and communicatively connectable to each other.

When sticks to mark an edge of a road for snow-clearing 228, 900 have been discussed in different systems 200, 300 and 400 above, it is to be understood that such poles may be sticks to mark an edge of a road for snow-clearing 228 of the modular type 900 or of the type with external stick to mark an edge of a road for snow-clearing modules 1005, or a combination of these types of sticks to mark an edge of a road for snow-clearing.

A stick to mark an edge of a road for snow-clearing with added functionality will include an energy module 505, 506, and as seen in Fig. 8 it will be advantageous to locate an energy module below ground level, that is, in the lower section 805 of stick to mark an edge of a road for snow-clearing 228, 900. By locating the energy module below ground level, a stable temperature around energy module 505, 506 will be achieved, and additionally the lower section of stick to mark an edge of a road for snow-clearing 805 will be less subject to mechanical loads. Stick to mark an edge of a road for snow-clearing modules 1005 including energy module 505, 506 may e.g. be located at the bottom of a stick to mark an edge of a road for snow-clearing that has been inserted into the ground, whereby the stick to mark an edge of a road for snow-clearing module, when covered by snow, will have a relatively stable ambient temperature. Also, the module will be less subject to mechanical loads than if it was placed higher up on the stick to mark an edge of a road for snow-clearing.

The energy module may be comprised of batteries, hyper/ultra capacitors, or a combination thereof. Batteries may be of a rechargeable type. If rechargeable batteries and/or hyper/ultra capacitors are used, then the energy modules normally will be fully charged when the sticks to mark an edge of a road for snow-clearing are installed. The sticks to mark an edge of a road for snow-clearing may be provided with means for recharging batteries and/or ultra/hyper capacitors. Contactless charging may be advantageous, particularly if maintenance charging while the poles are installed is desirable. Contactless charging may be provided by inductive charging. An inductive charging unit may be located above an energy module 506. If the inductive charging unit is located above ground level, then the charging unit will be accessible after the stick to mark an edge of a road for snow-clearing has been installed. In addition to, or instead of, a contactless charging unit, the sticks to mark an edge of a road for snow-clearing may be provided with power generation means for generating power to the rechargeable batteries and/or super/hyper capacitors. Power generating means may include thermoelectric elements and/or piezoelectric elements for generating power to the rechargeable batteries and/or super/hyper capacitors. Typically thermoelectric elements can utilize temperature differences between portions located in the ground and portions of the stick to mark an edge of a road for snow-clearing located above ground. Piezoelectric elements can provide charging if a stick to mark an edge of a road for snow-clearing is put in vibratory or flexural motion, for example. The stick to mark an edge of a road for snow-clearing may also be provided externally with solar cells and/or micro wind turbines for generating power to the rechargeable batteries and/or super/hyper capacitors. In one version, a contactless inductive charging unit can be included in the stick to mark an edge of a road for snow-clearing and then a stick to mark an edge of a road for snow-clearing module 1005 can be mounted on the stick to mark an edge of a road for snow-clearing if it is detected that an energy module 505 of a stick to mark an edge of a road for snow-clearing is running out of energy.

It is no point in providing a stick to mark an edge of a road for snow-clearing with an energy supply if the stick to mark an edge of a road for snow-clearing 228, 900 is not also provided with added functionality. As indicated above, a stick to mark an edge of a road for snow-clearing can be provided with instrumentation including sensing/sensor elements for collecting environmental parameters.

A stick to mark an edge of a road for snow-clearing according to the invention may be provided with one or more accelerometers used for measuring vibrations of a stick to mark an edge of a road for snow-clearing 228, 900, which vibrations may be induced by wind. The wind may be natural or induced by passing vehicles. Vibrations of a stick to mark an edge of a road for snow-clearing or bending of a stick to mark an edge of a road for snow-clearing can also be detected using strain gauges. Strain gauges may be particularly advantageous in the case of a more static type of deflection of a stick to mark an edge of a road for snow-clearing such as, for example, if a stick to mark an edge of a road for snow-clearing is deflected due to avalanche or precipitation in the form of snow.

A stick to mark an edge of a road for snow-clearing according to the invention may be provided with gyroscope(s), which gyroscope(s) can further provide information on angles, that is, for example, if a stick to mark an edge of a road for snow-clearing is deflected or bent up and down. The detection of passing vehicles can be performed by means of microphone - a passing vehicle will exhibit a distinctive «acoustic signature» that will distinguish it from wind, for example. Microphones will also be able to capture many other sounds of interest. Moreover, a detector providing information on a vibration frequency of a stick to mark an edge of a road for snow-clearing will be able to provide information on passing vehicles. When a vehicle passes a stick to mark an edge of a road for snow-clearing, then the «wind» effect from the vehicle will decrease for one stick to mark an edge of a road for snow-clearing but will increase for a following stick to mark an edge of a road for snow-clearing of a sequence of sticks to mark an edge of a road for snow-clearing. By considering how «vibrations» from one stick to mark an edge of a road for snow-clearing to a following stick to mark an edge of a road for snow-clearing propagates it is possible to make inferences about the velocity of passing vehicles.

One or more pressure sensors of a stick to mark an edge of a road for snow-clearing may provide information on ambient pressure and be of interest for capturing meteorological weather data. One or more pressure sensors 802 can also be used for indicating whether a pole is erected or has fallen down. Differential pressure meters may be calibrated for small differential pressures that will be able to provide information on the position of a stick to mark an edge of a road for snow-clearing.

Data from gyroscopes and/or accelerometers, and/or differential pressure sensors can be used for detecting theft of a stick to mark an edge of a road for snow-clearing.

A stick to mark an edge of a road for snow-clearing can be provided with one or more GPS receivers. A GPS receiver will provide information on the position of a stick to mark an edge of a road for snow-clearing 228, 900. A GPS module can also be used for accurate time determination.

A stick to mark an edge of a road for snow-clearing 228, 900 may be provided with timers, which timers could be used for communication purposes and in order to temporally associate physical parameters captured by sensors. In order to provide a precise indication of time, one or more timers may be radio-controlled so as to adjust to time signals from a radio station, allowing each clock of a network of sticks to mark an edge of a road for snow-clearing or a selected number of sticks to mark an edge of a road for snow-clearing having radio-controlled timers to be synchronized.

As it appears, a stick to mark an edge of a road for snow-clearing can be used for gathering a lot of parameters, which parameters may provide information on a traffic situation, on wind conditions, on snow amounts, precipitation amounts in general. Knowing the temperature and humidity it is possible to make inferences on the risk of difficult driving conditions. If a road section is blocked by an avalanche, then instrumented sticks to mark an edge of a road for snow-clearing may give notification thereof. The gathering of data is of limited value if it cannot be communicated.

Normally, sticks to mark an edge of a road for snow-clearing 228, 900 will be provided with storage means so that collected data is stored locally. To a road traffic central it will be important to obtain information in real-time or near real-time, so it would be advantageous if the sticks to mark an edge of a road for snow-clearing are provided with means of communication as indicated above. The means of communication can be used for transferring data from the sticks to mark an edge of a road for snow-clearing to a central system 210. Detectors detecting and capturing data continuously will capture a number of data that is not of interest, some parameters captured may be «incorrect» whereas other parameters may be particularly important, such as avalanche detection or pole theft, for example.

Microprocessors, combined with memory modules, may be used locally on sticks to mark an edge of a road for snow-clearing 228, 900 for analysing and discriminating between collected data/parameters. The processors can also be used for controlling communication as well as for controlling the operability of a stick to mark an edge of a road for snow-clearing. For example, it can be envisioned that a stick to mark an edge of a road for snow-clearing is passive during most of the operative time thereof and that it is awoken in certain cycles or by certain events that can bring it out of hibernation. In order to save power a processor may discriminate between data in such a manner that the data amount being transmitted to a central system is limited. Also, local processing of data will limit the processing necessary centrally as well as reduce the bandwidth requirements between sticks to mark an edge of a road for snow-clearing 228, 900 and a central system.

As mentioned, sticks to mark an edge of a road for snow-clearing 228, 900 may comprise one or more microprocessors, and, of course, may also comprise microcontrollers either additionally or alone. For some sticks to mark an edge of a road for snow-clearing, it can be advantageous if the stick to mark an edge of a road for snow-clearing comprises one or more programmable logic circuits and one or more PLSs.

Some sticks to mark an edge of a road for snow-clearing 228, 900 may be provided with communication means for long-range communication, that is, communication with a central system, and means of short-range communication, whereas other sticks to mark an edge of a road for snow-clearing 228, 900 are only provided with communication means for close-range communication such as WLAN, Bluetooth, ZigBee, Bluetooth LE. For example, long-range communication may use a cellular network such as Ultra Wide Band, GSM, UMTS, HSDPA, LTE, 5G, NB-IoT and LoRaWAN, and CDMA2000.

### Charging system

A more detailed disclosure of special aspects or elements of an instrumented stick to mark an edge of a road for snow-clearing 228, 900 is rendered below.

A charging system must be developed in which the batteries of the sticks to mark an edge of a road for snow-clearing are charged during storage, for example. This can be accomplished in that bundles of 50 poles, for example, are placed in an inductive charging means. The effective charging flow per pole doesn't have to be very high as the charging may be performed over a long period of time.

### Anti-theft system

A system must be developed that doesn't make it profitable to steal the stick to mark an edge of a road for snow-clearing. The system may be a combination of mechanical encapsulation/embedment of components and one or more sensors registering if the stick to mark an edge of a road for snow-clearing is removed from its original point of installation. Such removal may be due, for example, to theft or "boyish pranks". Thereby, the stick to mark an edge of a road for snow-clearing can be deactivated to prevent it from emitting incorrect data, such as incorrect position, for example.

Several of the sensors discussed above can be used for indicating theft or loss of a stick to mark an edge of a road for snow-clearing. Additionally to that sensors can be used, a change in signal strength of the communication among sticks to mark an edge of a road for snow-clearing 228, 900 may indicate that a stick to mark an edge of a road for snow-clearing changes position. If a stick to mark an edge of a road for snow-clearing has a GPS receiver, then changed position data will be a clear indication that a stick to mark an edge of a road for snow-clearing has been removed/relocated.

### CPU

A CPU solution must be selected in which the processing power and the ability to perform calculations and hence the power consumption may be controlled as needed. It is important that the CPU can be run in a hibernation function in which the power consumption is kept very low. This is particularly true when the stick to mark an edge of a road for snow-clearing is stored in a deactivated mode.

In addition, the CPU must have access to sufficient memory both in order to be able to carry out the analyses (RAM) themselves and to be capable to store calculations over time in a memory card (SD card), for example.

### Sensors

Which sensors are to be integrated in a stick to mark an edge of a road for snow-clearing can be adapted to the purpose, with exemplary sensors that may be incorporated being:
a) GPS
b) Timing reference (time stamp)
c) Accelerometers
d) Magnetometer
e) Gyroscope
f) Temperature sensor
g) Air humidity sensor
h) Light sensors
i) Acoustic sensor (microphone)
j) Tamper sensor (theft proofing)
k) Pressure sensor
l) Differential pressure sensor

It may be desirable to provide each stick to mark an edge of a road for snow-clearing with several sensors, with the CPU determining which sensors are to be active. This increases the flexibility in that the function of the pole can be determined subsequent to its installation.

### Wireless communication, remote control

One or more communication interfaces can be chosen for the sticks to mark an edge of a road for snow-clearing to be able to communicate both with each other and with a central system (back-end system) via the Internet, for example. Examples of candidate solutions for wireless communication may be:
a) ZigBee
b) Bluetooth LE
c) Ultra Wide Band (UWB)
d) GSM (2G, 4G, LTE, 5G...)

Wireless communication allows for both the transmission and reception of data and Over The air Administration (OTA), that is, remote control in that the function of the stick to mark an edge of a road for snow-clearing can be configured in addition to that firmware can be updated while it is installed on a road.

### Energy module with rechargeable batteries with a charging system

There are requirements for the energy module to have sufficient capacity to be able to power the electronics unit/instrumentation/means of communication during the desired period. The energy module should be positioned as low as possible due to weight considerations. Additionally, this may be an advantageous positioning of the battery with regard to temperature. The now pole is typically installed about 20 - 30 cm into the ground 603. The temperature of the ground 603 is more even than that of the air, and doesn't become as low, which is important for battery capacity if batteries are used in the energy module. In addition to batteries, the energy module may also contain electronics for measuring temperature in the ground 603 as well as monitoring the batteries themselves.

Similarly, a solution should be integrated that allows for simple charging, by inductive charging, for example, while the sticks to mark an edge of a road for snow-clearing are in storage and unused. It should also be considered whether solutions for charging while the sticks mark an edge of a road for snow-clearing are installed are to be included. In that respect, energy harvesting is cue, in which the batteries are recharged utilizing, for example, solar energy (solar cells), wind energy (mini wind turbine) or kinetic energy due to swaying (use of piezo technology).

The energy module may also contain electronics associated with tamper sensor and theft proofing.

### Data from the individual stick to mark an edge of a road for snow-clearing

### Position

Each individual stick to mark an edge of a road for snow-clearing 228, 900 can be pre-programmed by the activation unit 224 to contain its exact position. Thereby, each stick to mark an edge of a road for snow-clearing can be used as an accurate positioning reference. Accurate position data associated with specific sticks to mark an edge of a road for snow-clearing can be stored in a first computer of the user system for transferral to a central system.

### Time

The system of instrumented sticks to mark an edge of a road for snow-clearing needs to include an accurate timing reference. It is sufficient that one of the sticks to mark an edge of a road for snow-clearing of the sensor network periodically connects to a time server service in order to synchronize the clock. GPS may also be used for time synchronization. Then, the clocks of the remaining sticks to mark an edge of a road for snow-clearing can be synchronized with the same exact timing reference. In this manner, all sticks to mark an edge of a road for snow-clearing can operate using the same time stamp in the data communication.

### Accelerometer, magnetometer, and gyroscope.

Gyroscope referenced accelerometer data provides information on the mechanical loads to which the stick to mark an edge of a road for snow-clearing is subject by studying anything from vibrations to larger sway movements. This may be used, for example, in analysis to be able to make inferences on wind speed, and the onset of snow and rain. A magnetometer may register the compass points and relate data thereto. In this manner, it will be possible to indicate the wind direction. The sensors will also capture cars passing by due to the turbulence produced thereby and moving the sticks to mark an edge of a road for snow-clearing.

### Air humidity and temperature

The stick to mark an edge of a road for snow-clearing can include one or more temperature sensors. These may be located in an upper section in order to measure air temperature or in a lower section in order to measure temperature in the ground 603. If several sensors are provided, then a temperature profile is available which can be utilized. A humidity sensor together with temperature will be able to determine the dew point, for example.

### Light

A light sensor will capture daylight, for example, and provide indication on the quantity of light (cloudy, sunny ...). During the night, the sensor will be able to pick up car lights and thus count the number of cars (together with remaining sensors), for example.

### Sound

Analysis of microphone data can be used in combination with accelerometer data for, among other things, categorizing cars (size, length, etc.), as well as for assessing weather conditions.

### Tamper sensor (theft proofing, "stick to mark an edge of a road for snow-clearing removed sensor")

A sensor registering whether or not the stick to mark an edge of a road for snow-clearing has been removed from its original point of installation. The sensor may be, for example, an optical sensor that is mounted at the bottom of the stick to mark an edge of a road for snow-clearing, typically in the energy module, and that registers that the stick to mark an edge of a road for snow-clearing has been pulled up from its original point of installation. This may be due to theft or "boyish pranks." Thus, the stick to mark an edge of a road for snow-clearing can be deactivated in order to avoid errors in the data basis. This is particularly important if the stick to mark an edge of a road for snow-clearing is used for position indication.

As indicated above, if the stick to mark an edge of a road for snow-clearing includes a GPS receiver providing real-time position data, then such data in itself will indicate that a stick to mark an edge of a road for snow-clearing 228, 900 has been moved. In addition, as indicated, signal strength in the communication among sticks to mark an edge of a road for snow-clearing 228, 900 will indicate if a stick to mark an edge of a road for snow-clearing has been moved.

### Several sticks to mark an edge of a road for snow-clearing combined provide new functions

Several sticks to mark an edge of a road for snow-clearing combined may establish a sensor network that provides more and better functions than a single stick to mark an edge of a road for snow-clearing is be able to provide alone. The function of each individual pole can be determined during installation and can possibly be changed at a later point by means of the central system and remote control. In the following, exemplary functions are listed.

### Detection and categorization of a vehicle, velocity and direction

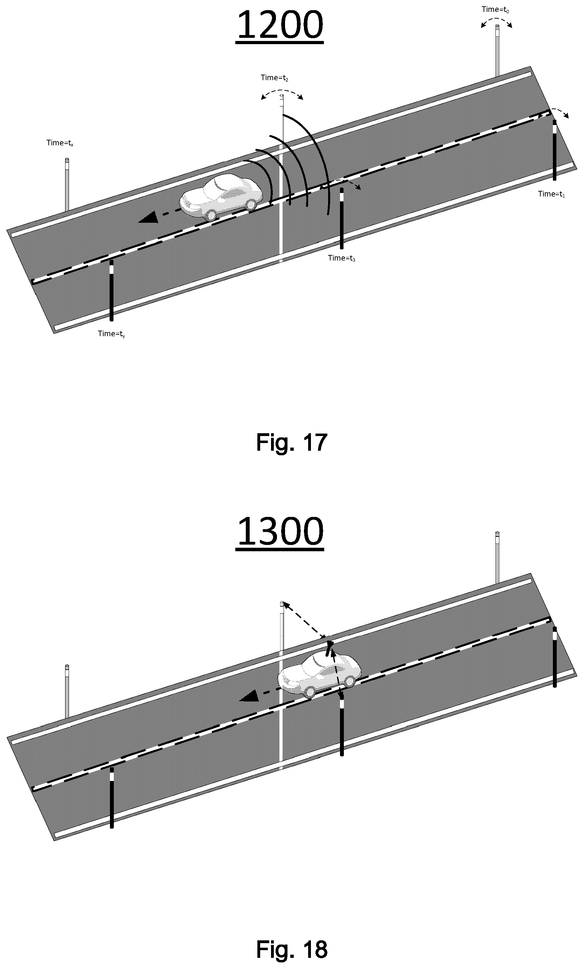

A passing vehicle will induce a sway movement in the stick to mark an edge of a road for snow-clearing that can be captured. When a vehicle passes several poles, it will be possible to register both velocity and direction, see Fig. 17. By analysing the movement it will also be possible to assess the size and length of the vehicle, and thus categorize the vehicle.

### Detection of weather conditions: wind speed and direction, as well as rain and snow

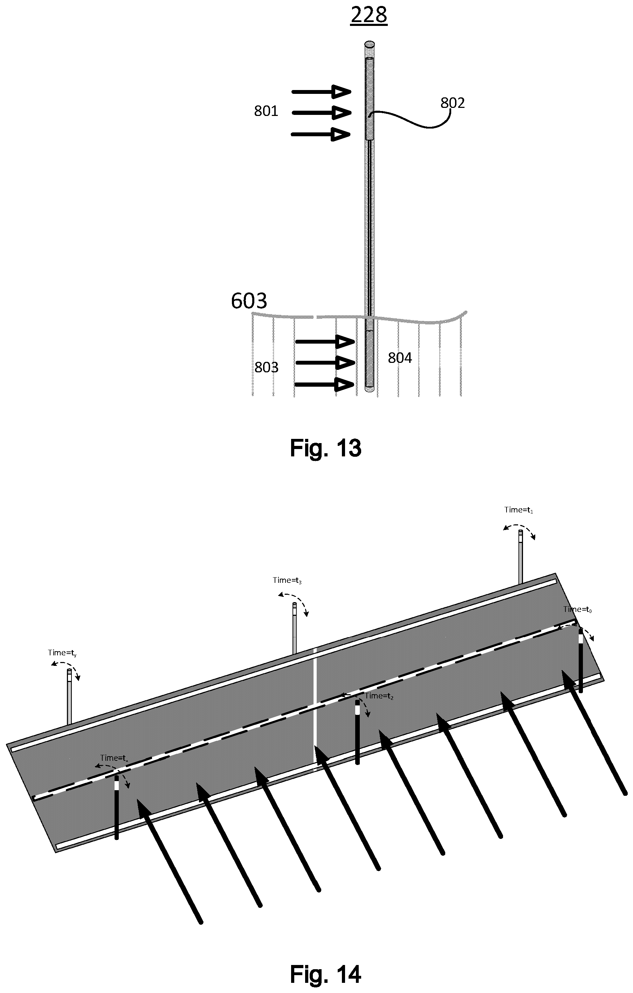

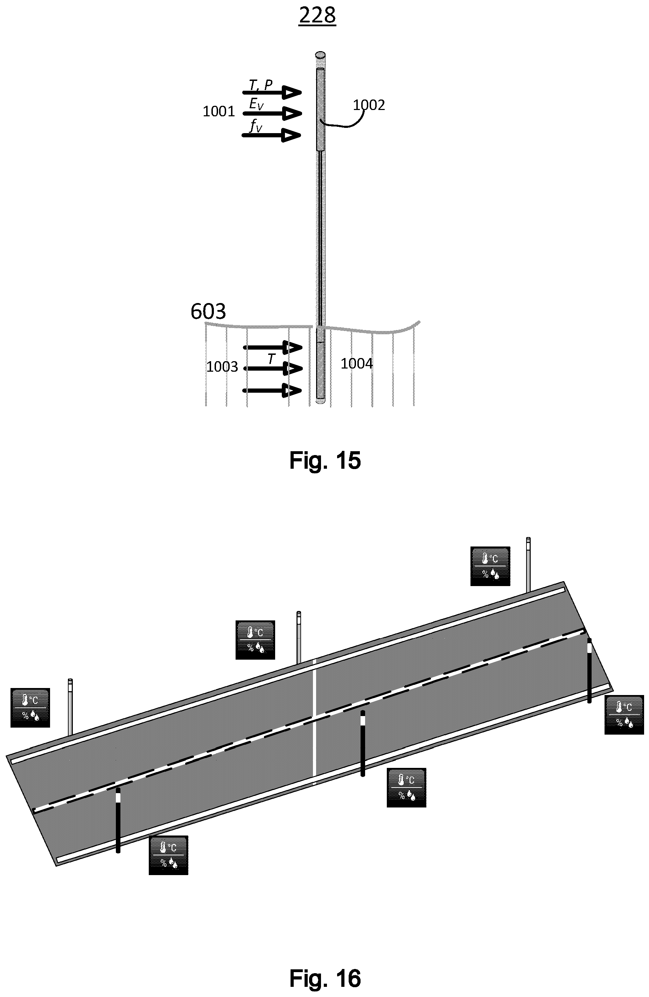

In windy conditions, the stick to mark an edge of a road for snow-clearing will exhibit a different swaying behaviour than when a vehicle passes, see Figs. 14 and 15. In combination with sound, it is also be possible to register whether or not there is precipitation in the wind. Wind with rain will produce one type of acoustic signatures, whereas wind with snow will produce different ones. If a stick to mark an edge of a road for snow-clearing 228, 900 is covered by snow, because a ploughing vehicle has passed by and covered it, or because it has been snowed down, then the movement behaviour of the stick to mark an edge of a road for snow-clearing will change. In that some sticks to mark an edge of a road for snow-clearing exhibit a reduced or different motion while others don't, it could be possible to make inferences on the snow conditions, for example.

### Position information for autonomous vehicles and snow clearing trucks in poor sight conditions

By using the sticks to mark an edge of a road for snow-clearing as beacons it is possible to establish a positioning system that is able to indicate the lateral positioning of a vehicle on the road with a relatively good accuracy as compared to traditional GPS, see Fig. 18. The sticks to mark an edge of a road for snow-clearing are positioned with a known positioning accuracy and may therefore be used as a position reference. Several options are available:
a) ZigBee: based on the IEEE 802.15.4 standard. Makes it possible to achieve a positioning accuracy in the order of 0.5 meters at a relative low cost.
b) Ultra Wideband (UWB) positioning: Utilizes a technique referred to as time difference of arrival (TDOA) of the RF signals. Having a bandwidth of 500 MHz, a practical accuracy of approximately 10 cm can be achieved.
c) Received signal strength (RSS). In this method, a receiver module of a vehicle located on the road between two sticks to mark an edge of a road for snow-clearing positioned one at each side of the road will be able to calculate the position based on the registered signal field strength. RSS is a relatively uncertain method but in the setup with sticks to mark an edge of a road for snow-clearing the range is relatively limited, and there are not a great number of objects that could interfere with the radio signals. The optimal antenna positioning is on the roof of the vehicle reading the position.

### Options for coupling with other data sources

Data from this type of sensor network is analysed and coupled with data from other sources such as weather stations and weather forecast. In this manner a better overview of both weather and traffic conditions along the instrumented road section is obtained. Data can be used as input for decision making support to both contractors and transporters. Data analysis may be used, inter alia, for:
a) Counting and categorizing vehicles
b) Registering weather conditions
c) Measuring temperature at different heights, including in the ground 603
d) Providing autonomous vehicles with position information, including the position of the vehicle in the roadway.

| | |
|---|---|
| 200 | Stick to mark an edge of a road for snow-clearing installation system |
| 22 | Retrieval assembly |
| 210 | Central system |
| 213 | Computers/workstations |
| 214 | Communication line between computers/workstations 213 and data server and/or database 215 |
| 215 | Data server and/or database |
| 216 | Communication line between central system and transceiver 217 |
| 217 | Radio transceiver/base station |
| 220 | User system. Transport and installation arrangement |
| 221 | Workstation/computer/smartphone |
| 222 | Inspection and control unit of robot (means) for stick to mark an edge of a road for snow-clearing installation and programming |
| 223 | Stick to mark an edge of a road for snow-clearing manipulator. Robotic arm/arm for picking up sticks to mark an edge of a road for snow-clearing from stick to mark an edge of a road for snow-clearing basket 227, drilling holes for the sticks to mark an edge of a road for snow-clearing and installing the sticks to mark an edge of a road for snow-clearing. |
| 224 | Activation system including interface for communication with workstation/computer/smartphone 221 in user system 220. |
| 225 | Communication interface between workstation/computer/smartphone 221 and activation system 224. |
| 226 | Communication interface between activation system 224 and sticks to mark an edge of a road for snow-clearing 228. |
| 227 | Stick to mark an edge of a road for snow-clearing holder, stick to mark an edge of a road for snow-clearing basket/storage |
| 228 | Sticks to mark an edge of a road for snow-clearing |
| 230 | Wireless communication over the Internet or a cellular network, for example. |
| 231 | Wireless communication interface between base station/transceiver 217 and the Internet/cellular network. The interface may be GSM/GPRS/UMTS or another cellular network. |
| 232 | Wireless communication interface between the Internet 230 and the user system. |
| 233 | Transportation means, vehicle, truck |
| 300 | Stick to mark an edge of a road for snow-clearing system |
| 301 | Intercommunication among sticks to mark an edge of a road for snow-clearing, in a MESH configuration, for example. |
| 302 | Hubs/central communication modules for wireless communication between hub stick to mark an edge of a road for snow-clearing 303 or hub stick to mark an edge of a road for snow-clearing 304 and the Internet 230 |
| 303 | Hub stick to mark an edge of a road for snow-clearing. |
| 304 | Hub stick to mark an edge of a road for snow-clearing |
| 400 | Stick to mark an edge of a road for snow-clearing retrieval system |
| 501 | Top/upper end of a stick to mark an edge of a road for snow-clearing |
| 502 | Reflex |
| 503 | Electronics module, instrumentation |
| 504 | Power and data cable |
| 505 | Energy module, operating means |
| 506 | Energy module, operating means |
| 507 | Bottom of stick to mark an edge of a road for snow-clearing 228 |
| 601 | Wireless communication, means of communication |
| 602 | Radio module(s), antenna(s), means of communication |
| 603 | Ground level |
| 701 | Measurement of airborne parameters |
| 702 | Microcontrollers, sensors above ground level, energy harvesting (sun/wind) |
| 703 | Cable bundle/cable network |
| 705 | Subsurface/below ground level measurement |
| 706 | Batteries, charge controller(s), anti-theft module, microcontroller, and subsurface sensors. |
| 801 | Directional movement, vibrations and sound propagating through air |
| 802 | Accelerometer, gyroscope, magnetometer(s) and microphone |
| 803 | Vibrations via the ground |
| 804 | Accelerometer(s). |
| 805 | Lower part of a stick to mark an edge of a road for snow-clearing 228 |
| 806 | Upper part of a stick to mark an edge of a road for snow-clearing 228 |
| 900 | Modular stick to mark an edge of a road for snow-clearing |
| 901 | Upper module of a modular stick to mark an edge of a road for snow-clearing |
| 902 | Central, not active part of a modular stick to mark an edge of a road for snow-clearing |
| 903 | Lower part of a modular stick to mark an edge of a road for snow-clearing |
| 1001 | Temperature, humidity, pressure, precipitation, light sensing |
| 1002 | Temperature sensor, humidity sensor, pressure sensor, microphone, light sensor |
| 1003 | Ground/subsurface temperature |
| 1004 | Temperature sensor |
| 1005 | Module for being mounted on sticks to mark an edge of a road for snow-clearing. |
| 1200 | Distributed sensor network. Sound and vibration are detected by sensors located in separate sticks to mark an edge of a road for snow-clearing along the route, at times = t0, t1 ... tx, ty. |
| | Data samples including accurate time stamps are transferred for further analysis. Data processing may be carried out locally on a dedicated station. |
| 1300 | Locating a stick to mark an edge of a road for snow-clearing using position data transmitted from vehicle. |
| CPU | Central Processing Unit |
| PLS | Programmable limit switch |
| LAN | Local Area Network |
| WLAN | Wireless LAN |
| GSM | Global System for Mobile communications, Originally Groupe Spécial Mobile |
| UMTS | Universal Mobile Telecommunications System |
| HSDPA | High-Speed Downlink Packet Access |
| LTE | Long-Term Evolution, marketed as 4G LTE or only 4G |
| LoRaWAN | Long Range Wide Area Network, i.e. LoRa, operates in WAN. |
| NB-IoT | Narrow Band-Internet of the Things, is a Low Power Wide Area Network (LPWAN) radio technology standard developed by 3GPP |
| 5G | Fifth generation technology for mobile services in cellular networks, a successor of 4G |
| CDMA 2000 | Code-Division Multiple Access |
| ZigBee | Is a standard for the wireless control and monitoring of equipment. The platform supports mesh network, star network, and tree structure, as well as combinations thereof. |
| d1 | Internal diameter of module 1005 for being mounted on sticks to mark an edge of a road for snow-clearing 228, d1 ≥ outer diameter of stick to mark an edge of a road for snow-clearing 228 |
| D | Outer diameter of module 1005 for being mounted on sticks to mark an edge of a road for snow-clearing 228 |
| h | Height of module 1005 for being mounted on sticks to mark an edge of a road for snow-clearing 228. |

## Claims

1. A stick to mark an edge of a road for snow-clearing (228, 900), **characterized by** at least comprising in an internal cavity:
a) one or more accelerometers (802),
b) one or more gyroscopes (702, 802), or
c) one or more vibration meters
configured to measure vibration of a stick to mark an edge of a road for snow-clearing (228, 900) where the vibration is resulting from external forces applied to the stick to mark an edge of a road for snow (228, 900).

2. The stick to mark an edge of a road for snow-clearing (228, 900) of claim 1, said stick to mark an edge of a road for snow-clearing further at least comprising:
a) instrumentation for measuring and collecting physical parameters from the surroundings,
b) one or more operating means for operating the instrumentation for measuring and collecting physical parameters from the surroundings, and
c) means for:
i. storing collected physical parameters, and/or
ii. relaying collected physical parameters using means of communication.

3. The stick to mark an edge of a road for snow-clearing (228, 900) of claims 1 or 2, further comprising one or more processing units for processing collected physical parameters.

4. The stick to mark an edge of a road for snow-clearing (228, 900) of any of claims 1 - 3, wherein the instrumentation comprises one of or a combination of:
one or more microphones (802, 1002), one or more pressure sensors (1002), one or more humidity meters (1002), a theft sensor, one or more GPS modules, one or more timers, one or more magnetometers, and one or more light sensors (1002).

5. The stick to mark an edge of a road for snow-clearing (228, 900) of claim 4, wherein said one or more timers are radio-controlled and adjust to time signals from a radio station and/or wherein the one or more timers adjust to the received GPS time signals.

6. The stick to mark an edge of a road for snow-clearing of any of claims 1 - 5, said stick to mark an edge of a road for snow-clearing being provided internally with thermoelectric elements and/or piezoelectric elements for generating power to rechargeable batteries and/or super/hyper capacitors.

7. The stick to mark an edge of a road for snow-clearing (228, 900) of any of claims 1 - 6, comprising inductive charging means.

8. The stick to mark an edge of a road for snow-clearing (228, 900) of any of claims 4-7, wherein one or more differential pressure sensors are configured to monitor the condition of a stick to mark an edge of a road for snow-clearing.

9. The stick to mark an edge of a road for snow-clearing (228, 900) of any of claims 2-8, further at least comprising:
a) instrumentation inside the stick to mark an edge of a road for snow-clearing for measuring and collecting physical parameters from the surroundings, the instrumentation being divided into an upper part (501, 901) located in the upper portion of the stick to mark an edge of a road for snow-clearing (228, 900) and a lower part (507, 903) located in the lower portion of the stick to mark an edge of a road for snow-clearing (228, 900), a communication interface being provided between the upper part of the instrumentation and the lower part of the instrumentation,
b) the one or more operating means for operating the instrumentation and operating the processing unit or processing units, being located in the lower portion of the stick to mark an edge of a road for snow-clearing (228, 900),
c) the means for storing collected physical parameters,
d) the means of communication being means for short-range communication and/or long-range communication, and
e) the one or more processing units for processing collected physical parameters.

10. An installation system (200) for installing sticks to mark an edge of a road for snow-clearing (228, 900) along a road section, said installation system at least comprising:
a) a transport and installation arrangement (220) including:
i. an installation assembly (222, 223, 224),
ii. a stick to mark an edge of a road for snow-clearing -holder (227) with sticks to mark an edge of a road for snow-clearing (228, 900) of claim 1,
iii. and a first computer (221) having communication means for short-range communication within the transport and installation arrangement and long-range wireless communication,
b) a central system (210) comprising one or more second computers (213) and one or more communication means for wireless communication with the first computer (221) of the transport and installation arrangement (220).

11. The installation system of claim 10, wherein the installation assembly further comprises: a stick to mark an edge of a road for snow-clearing manipulator (223), an inspection and control unit (222) of the stick to mark an edge of a road for snow-clearing manipulator (223), and an activation system (224) having communication means for communicating with the first computer (221).

12. The installation system of claims 10 or 11, wherein the transport and installation arrangement (220) comprise position-determining means.

13. The installation system of claim 12, wherein position data from the transport and installation arrangement (220) is configured to transfer position data to at least one stick to mark an edge of a road for snow-clearing (228, 900).

14. The installation system of claims 12 or 13, wherein the transport and installation arrangement (220) is configured to transfer timing parameters, such as time stamps, to at least one stick to mark an edge of a road for snow-clearing (228, 900).

## Patentansprüche

1. Stab, um einen Straßenrand zum Schneeräumen (228, 900) zu markieren, **dadurch gekennzeichnet, dass** er mindestens in einem inneren Hohlraum umfasst:
a) einen oder mehrere Beschleunigungsmesser (802),
b) ein oder mehrere Gyroskope (702, 802), oder
c) ein oder mehrere Schwingungsmesser
konfiguriert, um die Schwingung eines Stabs, um einen Straßenrand für das Schneeräumen (228, 900) zu markieren, zu messen, wobei die Schwingung aus externen Kräften resultiert, die auf den Stab, um einen Straßenrand für Schnee (228, 900) zu markieren, ausgeübt werden.

2. Stab, um einen Straßenrand zum Schneeräumen (228, 900) zu markieren, nach Anspruch 1, der Stab, um einen Straßenrand zum Schneeräumen zu markieren, ferner mindestens umfassend:
a) Instrumentierung zum Messen und Erfassen physikalischer Parameter aus der Umgebung,
b) ein oder mehrere Betriebsmittel zum Betreiben der Instrumentierung zum Messen und Erfassen physikalischer Parameter aus der Umgebung und
c) Mittel zum:
i. Speichern der erfassten physikalischen Parameter und/oder
ii. Weiterleiten der erfassten physikalischen Parameter mittels Kommunikation.

3. Stab, um einen Straßenrand zum Schneeräumen (228, 900) zu markieren, nach Anspruch 1 oder 2, ferner umfassend eine oder mehrere Verarbeitungseinheiten zum Verarbeiten der erfassten physikalischen Parameter.

4. Stab, um einen Straßenrand zum Schneeräumen (228, 900) zu markieren, nach einem der Ansprüche 1 bis 3, wobei die Instrumentierung eines oder eine Kombination umfasst von:
einem oder mehreren Mikrofone (802, 1002), einem oder mehreren Drucksensoren (1002), einem oder mehreren Feuchtigkeitsmessern (1002), einem Diebstahlsensor, einem oder mehreren GPS-Modulen, einem oder mehreren Zeitgebern, einem oder mehreren Magnetometern und einem oder mehreren Lichtsensoren (1002).

5. Stab, um einen Straßenrand zum Schneeräumen (228, 900) zu markieren, nach Anspruch 4,
wobei der eine oder die mehreren Zeitgeber funkgesteuert sind und sich an Zeitsignale einer Funkstation anpassen und/oder wobei sich der eine oder die mehreren Zeitgeber an die empfangenen GPS-Zeitsignale anpassen.

6. Stab, um einen Straßenrand zum Schneeräumen zu markieren, nach einem der Ansprüche 1 bis 5,
wobei der Stab, um eine Straßenkante zum Schneeräumen zu markieren, innen mit thermoelektrischen Elementen und/oder piezoelektrischen Elementen zum Generieren von Leistung für wiederaufladbare Batterien und/oder Super-/Hyperkondensatoren versehen ist.

7. Stab, um einen Straßenrand zum Schneeräumen (228, 900) zu markieren, nach einem der Ansprüche 1 bis 6, umfassend induktive Lademittel.

8. Stab, um einen Straßenrand zum Schneeräumen (228, 900) zu markieren, nach einem der Ansprüche 4 bis 7, wobei ein oder mehrere Differenzdrucksensoren konfiguriert sind, um den Zustand eines Stabs, um eine Straßenkante zum Schneeräumen zu markieren, zu überwachen.

9. Stab, um einen Straßenrand zum Schneeräumen (228, 900) zu markieren, nach einem der Ansprüche 2 bis 8, ferner mindestens umfassend:
a) eine Instrumentierung im Inneren des Stabs, um eine Straßenkante zum Schneeräumen zu markieren, zum Messen und Erfassen physikalischer Parameter aus der Umgebung, wobei die Instrumentierung in einen oberen Teil (501, 901), der sich in dem oberen Abschnitt des Stabs, um eine Straßenkante zum Schneeräumen (228, 900) zu markieren, befindet, und einen unteren Teil (507, 903) unterteilt ist, der sich in dem unteren Abschnitt des Stabs, um eine Straßenkante zum Schneeräumen (228, 900) zu markieren, befindet, wobei zwischen dem oberen Teil der Instrumentierung und dem unteren Teil der Instrumentierung eine Kommunikationsschnittstelle bereitgestellt ist,
b) das eine oder die mehreren Betriebsmittel zum Betreiben der Instrumentierung und zum Betreiben der Verarbeitungseinheit oder Verarbeitungseinheiten, die sich in dem unteren Abschnitt des Stabs, um einen Straßenrand zum Schneeräumen (228, 900) zu markieren, befinden,
c) die Mittel zum Speichern der erfassten physikalischen Parameter,
d) die Kommunikationsmittel, die Mittel für eine Nahbereichskommunikation und/oder eine Fernbereichskommunikation sind, und
e) die eine oder die mehreren Verarbeitungseinheiten zum Verarbeiten erfasster physikalischer Parameter.

10. Installationssystem (200) zum Installieren von Stäben, um eine Straßenkante zum Schneeräumen (228, 900) zu markieren, entlang einer Straßensektion, das Installationssystem mindestens umfassend:
a) eine Transport- und Installationsanordnung (220), die einschließt:
i. eine Installationsbaugruppe (222, 223, 224),
ii. einen Halter (227) für einen Stab, um einen Straßenrand zum Schneeräumen zu markieren, mit Stäben, um einen Straßenrand zum Schneeräumen (228, 900) zu markieren, nach Anspruch 1,
iii. und einen ersten Computer (221), der Kommunikationsmittel für die Nahbereichskommunikation innerhalb der Transport- und Installationsanordnung und die drahtlose Fernbereichskommunikation aufweist,
b) ein zentrales System (210), umfassend einen oder mehrere zweite Computer (213) und ein oder mehrere Kommunikationsmittel für die drahtlose Kommunikation mit dem ersten Computer (221) der Transport- und Installationsanordnung (220).

11. Installationssystem nach Anspruch 10, wobei die Installationsbaugruppe ferner umfasst: einen Manipulator (223) für einen Stab, um einen Straßenrand zum Schneeräumen zu markieren, eine Inspektions- und Steuereinheit (222) des Manipulators (223) für den Stab, um einen Straßenrand zum Schneeräumen zu markieren, und ein Aktivierungssystem (224), das Kommunikationsmittel zum Kommunizieren mit dem ersten Computer (221) aufweist.

12. Installationssystem nach Anspruch 10 oder 11, wobei die Transport- und Installationsanordnung (220) Positionsbestimmungsmittel umfasst.

13. Installationssystem nach Anspruch 12, wobei Positionsdaten von der Transport- und Installationsanordnung (220) konfiguriert sind, um Positionsdaten an mindestens einen Stab, um einen Straßenrand zum Schneeräumen (228, 900) zu markieren, zu übertragen.

14. Installationssystem nach Anspruch 12 oder 13, wobei die Transport- und Installationsanordnung (220) konfiguriert ist, um Zeitparameter, wie Zeitstempel, an mindestens einen Stab, um einen Straßenrand zum Schneeräumen (228, 900) zu markieren, zu übertragen.

## Revendications

1. Bâton destiné à marquer un bord d'une route pour le déneigement (228, 900), **caractérisé par** au moins le fait qu'il comprend une cavité interne :
a) un ou plusieurs accéléromètres (802),
b) un ou plusieurs gyroscopes (702, 802), ou
c) un ou plusieurs vibromètres
configurés pour mesurer les vibrations d'un bâton destiné à marquer le bord d'une route pour le déneigement (228, 900), où les vibrations résultent de forces externes appliquées au bâton destiné à marquer le bord d'une route pour le déneigement (228, 900).

2. Bâton destiné à marquer un bord d'une route pour le déneigement (228, 900) selon la revendication 1, ledit bâton pour marquer le bord d'une route pour le déneigement comprenant en outre au moins :
a) les instruments de mesure et de collecte des paramètres physiques de l'environnement,
b) un ou plusieurs moyens d'exploitation pour faire fonctionner l'instrumentation de mesure et de collecte des paramètres physiques de l'environnement, et
c) signifie pour :
i. stocker les paramètres physiques recueillis, et/ou
ii. transmettre des paramètres physiques recueillis à l'aide de moyens de communication.

3. Bâton destiné à marquer un bord d'une route pour le déneigement (228, 900) selon les revendications 1 ou 2, comprenant en outre une ou plusieurs unités de traitement pour traiter les paramètres physiques recueillis.

4. Bâton destiné à marquer un bord d'une route pour le déneigement (228, 900) selon l'une quelconque des revendications 1 à 3, dans lequel l'instrumentation comprend un parmi ou une combinaison parmi :
un ou plusieurs microphones (802, 1002), un ou plusieurs capteurs de pression (1002), un ou plusieurs compteurs d'humidité (1002), un détecteur de vol, un ou plusieurs modules GPS, une ou plusieurs minuteries, un ou plusieurs magnétomètres et un ou plusieurs capteurs de lumière (1002).

5. Bâton destiné à marquer un bord d'une route pour le déneigement (228, 900) selon la revendication 4,
dans lequel ladite ou lesdites minuteries sont commandées par radio et s'adaptent aux signaux horaires d'une station radio et/ou dans lequel la ou les minuteries s'adaptent aux signaux horaires GPS reçus.

6. Bâton destiné à marquer un bord d'une route pour le déneigement selon l'une quelconque des revendications 1 à 5,
ledit bâton destiné à marquer un bord d'une route pour le déneigement étant équipé à l'intérieur d'éléments thermoélectriques et/ou d'éléments piézoélectriques pour générer de l'énergie vers des batteries rechargeables et/ou des super/hyper condensateurs.

7. Bâton destiné à marquer un bord d'une route pour le déneigement (228, 900) selon l'une quelconque des revendications 1 à 6, comprenant des moyens de charge inductive.

8. Bâton destiné à marquer un bord d'une route pour le déneigement (228, 900) selon l'une quelconque des revendications 4 à 7, dans lequel un ou plusieurs capteurs de pression différentielle sont configurés pour surveiller l'état d'un bâton pour marquer le bord d'une route pour le déneigement.

9. Bâton destiné à marquer un bord d'une route pour le déneigement (228, 900) selon l'une quelconque des revendications 2 à 8, comprenant en outre au moins :
a) un instrument à l'intérieur du bâton pour marquer le bord d'une route pour le déneigement afin de mesurer et de collecter des paramètres physiques de l'environnement, l'instrument étant divisé en une partie supérieure (501, 901) située dans la partie supérieure du bâton pour marquer le bord d'une route pour le déneigement (228, 900) et une partie inférieure (507, 903) située dans la partie inférieure du bâton pour marquer le bord d'une route pour le déneigement (228, 900), une interface de communication étant fournie entre la partie supérieure de l'instrumentation et la partie inférieure de l'instrumentation,
b) le ou les moyens de commande de l'instrumentation et de l'unité ou des unités de traitement, situés dans la partie inférieure du bâton pour marquer le bord d'une route pour le déneigement (228, 900),
c) les moyens de stockage des paramètres physiques collectés,
d) les moyens de communication sont des moyens de communication à courte portée et/ou à longue portée, et
e) la ou les unités de traitement pour traiter les paramètres physiques recueillis.

10. Système d'installation (200) de bâtons destiné à marquer un bord d'une route pour le déneigement (228, 900) le long d'une section de route, ledit système d'installation comprenant au moins :
a) un dispositif de transport et d'installation (220) comportant :
i. un ensemble d'installation (222, 223, 224),
ii. un bâton pour marquer un bord d'une route pour le déneigement - support (227) avec des bâtons pour marquer un bord d'une route pour le déneigement (228, 900) selon la revendication 1,
iii. et un premier ordinateur (221) doté de moyens de communication pour les communications à courte distance à l'intérieur du dispositif de transport et d'installation et pour les communications sans fil à longue distance,
b) un système central (210) comprenant un ou plusieurs seconds ordinateurs (213) et un ou plusieurs moyens de communication pour communiquer sans fil avec le premier ordinateur (221) du dispositif de transport et d'installation (220).

11. Système d'installation selon la revendication 10, dans lequel l'ensemble d'installation comprend en outre : un bâton pour marquer un bord de route pour le manipulateur de déneigement (223), une unité d'inspection et de contrôle (222) du bâton pour marquer un bord de route pour le manipulateur de déneigement (223), et un système d'activation (224) ayant des moyens de communication pour communiquer avec le premier ordinateur (221).

12. Système d'installation selon les revendications 10 ou 11, dans lequel le dispositif de transport et d'installation (220) comprend des moyens de détermination de position.

13. Système d'installation selon la revendication 12, dans lequel les données de position du dispositif de transport et d'installation (220) sont configurées pour transférer les données de position à au moins un bâton pour marquer le bord d'une route pour le déneigement (228, 900).

14. Système d'installation selon les revendications 12 ou 13, dans lequel le dispositif de transport et d'installation (220) est configuré pour transférer des paramètres temporels, tels que des horodateurs, à au moins un bâton pour marquer le bord d'une route pour le déneigement (228, 900).
